# EUROPEAN PATENT SPECIFICATION

(11) **EP 2 190 330 B1**
(45) Date of publication and mention of the grant of the patent: **12.01.2011**
(21) Application number: 08788864.0
(22) Date of filing: 07.07.2008
(51) Int. Cl.: A47J 31/46, A47J 31/60, A47J 31/36

(54) **BEVERAGE-MAKING METHOD**
GETRÄNKEZUBEREITUNGSVERFAHREN
PROCÉDÉ DE PRODUCTION DE BOISSONS

(30) Priority: 27.07.2007 IT TO20070556
(43) Date of publication of application: 02.06.2010
(73) Proprietor: SGL Italia S.r.l. con unico socio, 10156 Torino (TO) (IT)
(72) Inventor: BERTOLINA, Andrea, I-14048 Montegrosso d'Asti (IT); GAMBAUDO, Gian, Mauro, I-14049 Nizza Monferrato (IT)
(74) Representative: Jorio, Paolo
(86) International application number: PCT/IB2008/001779
(87) International publication number: WO 2009/016444

(56) References cited:
- GB-A- 1 017 883
- US-A- 5 307 735

## Description

### TECHNICAL FIELD

The present invention relates to a beverage-making method.

More specifically, the present invention relates to a method of making beverages by percolating anhydrous material, and whereby a beverage is produced by a percolating assembly performing an operating cycle, during which the percolating assembly discharges the beverage by means of an outflow member. Such a method is disclosed in US-A-5307735.

### BACKGROUND ART

In percolators operating according to the above method, a relatively long time may elapse between one operating cycle and the next, during which any leftover beverage along the outflow member may dry and so affect the quality of subsequent beverages.

### DISCLOSURE OF THE INVENTION

It is an object of the present invention to provide a beverage-making method designed to eliminate the above drawback.

According to the present invention, there is provided a beverage-making method as claimed in Claim 1 and preferably in any one of the following Claims depending directly or indirectly on Claim 1.

### BRIEF DESCRIPTION OF THE DRAWINGS

A non-limiting embodiment of the invention will be described by way of example with reference to the accompanying drawings, in which:
Figure 1 shows a view in perspective of a machine implementing the method according to the present invention;
Figure 2 shows a partly sectioned side view, with parts removed for clarity, of the Figure 1 machine;
Figure 3 shows a larger-scale view in perspective, with parts removed for clarity, of a detail in Figure 2;
Figure 4 shows a larger-scale view in perspective of a detail in Figure 1;
Figures 5-12 are similar to Figure 2, and show the Figure 2 machine in respective different operating positions;
Figure 13 shows a larger-scale detail of Figure 1;
Figure 14 shows a further embodiment of a machine of the present invention;
Figure 15 shows a section of a variation of a detail in Figure 2.

### BEST MODE FOR CARRYING OUT THE INVENTION

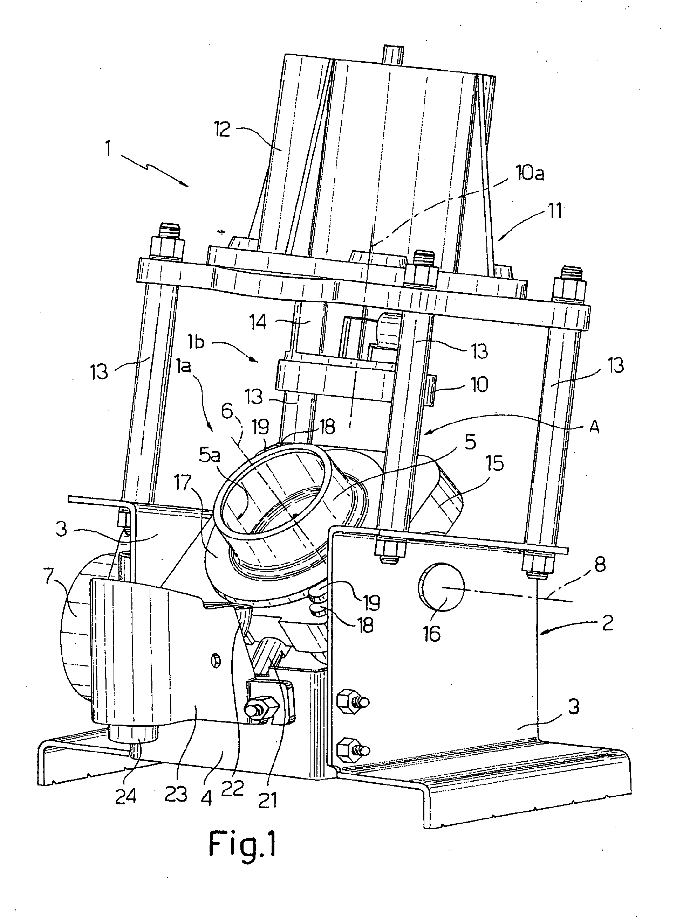

Number 1 in Figure 1 indicates as a whole a beverage-making machine.

Machine 1 comprises a frame 2 having two opposite parallel lateral walls 3, and a front wall 4 connecting lateral walls 3 and facing the user in use.

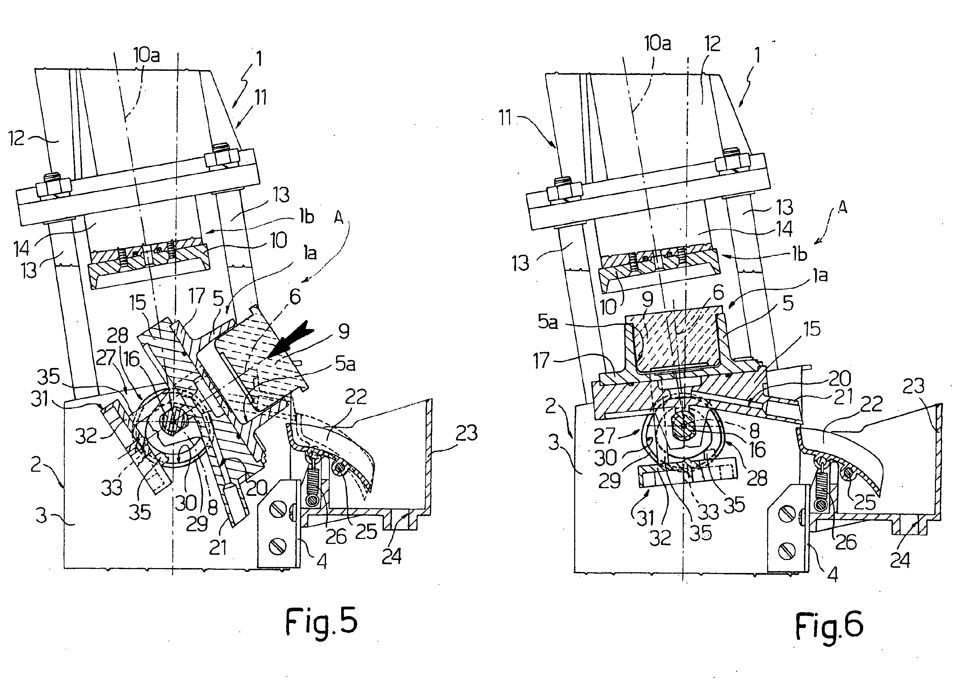

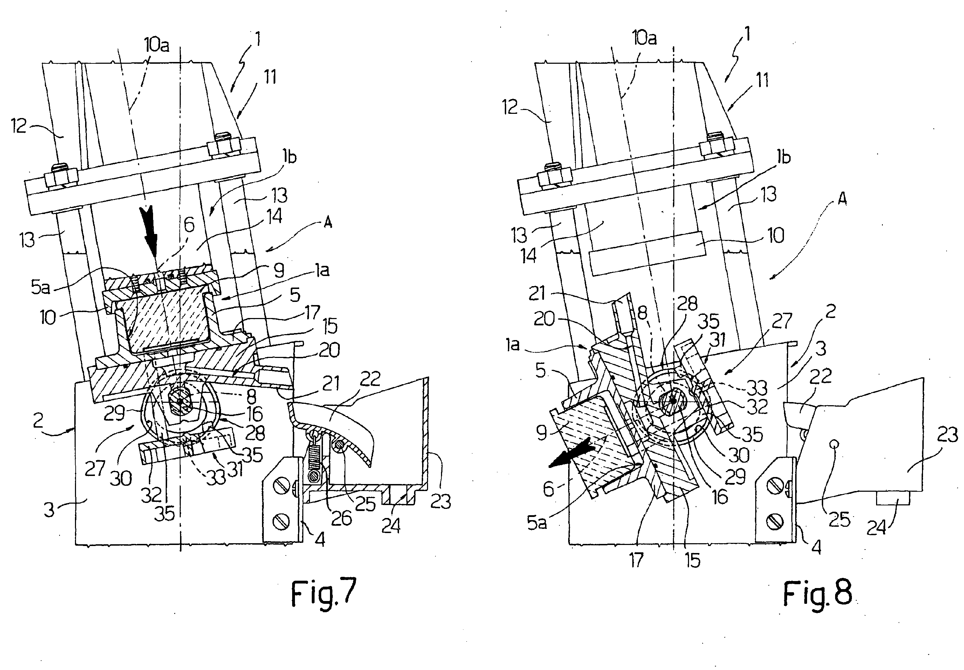

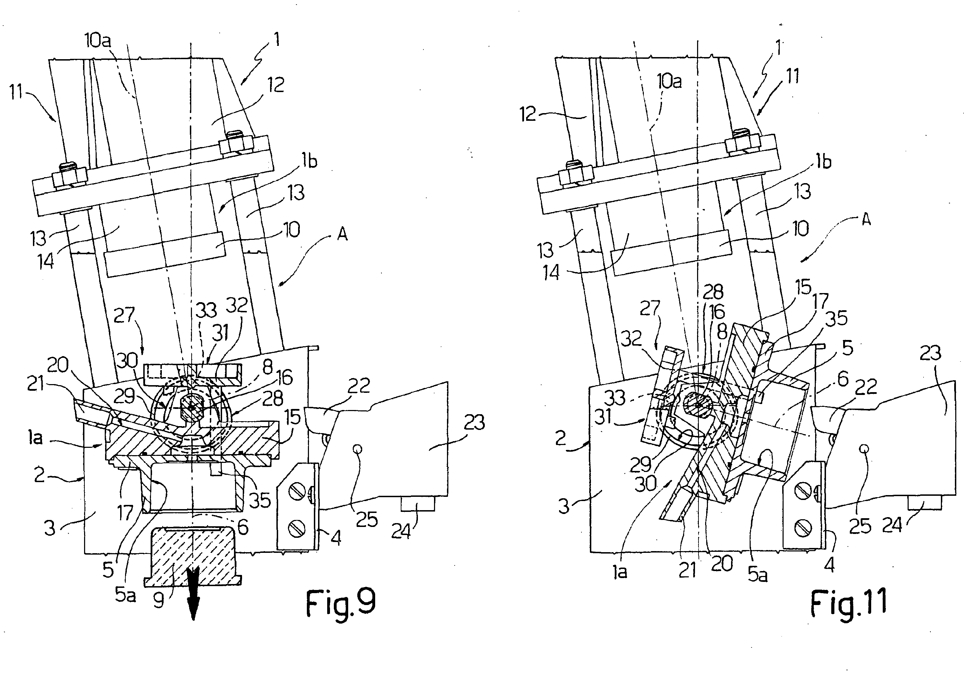

Inside frame 2, machine 1 comprises a percolating assembly A comprising a container-holder 1a, which in turn comprises a percolating cup 5 having an axis 6 perpendicular to its bottom wall, and defining an inner chamber 5a; and container-holder 1a is fitted to frame 2 to rotate, under control of a motor 7, about a substantially horizontal axis 8 perpendicular to axis 6. More specifically, and as described in detail below, container-holder 1a is operated in use by motor 7 to rotate successively, in a given direction (anticlockwise in Figures 5 to 12), into a loading position (Figures 1, 2, 5), in which cup 5 is tilted upwards, with its opening facing the user, to receive a container 9, e.g. a known capsule or wafer containing a measure of ground coffee; a percolating position (Figure 7), in which cup 5 is rotated with respect to the loading position, but still with its opening facing upwards; and an unloading position (Figure 9), in which cup 5 is positioned with its opening facing downwards.

Percolator assembly A also comprises a pressurized-hot-water dispenser 1b, in turn comprising a hydraulic circuit (not shown), and a sprinkler 10 which is supplied with pressurized hot water by the hydraulic circuit, is located over and facing cup 5, and is movable, along an axis 10a, between a raised rest position (Figures 1, 5, 6, 8), in which sprinkler 10 is detached from cup 5, and a lowered work position (Figure 7), in which, when cup 5 is in the percolating position with axis 6 coaxial with axis 10a, sprinkler 10 is connected to cup 5 to feed pressurized hot water into container 9 housed inside cup 5.

Sprinkler 10 is moved along axis 10a by a push assembly 11 which forms part of the machine and is defined, in the example shown, by a hydraulic cylinder coaxial with axis 10a and comprising a fixed sleeve 12 fitted to frame 2 by four uprights 13, and a piston 14 which slides along sleeve 12 and is fitted rigidly, at its free end facing cup 5, with sprinkler 10 to move sprinkler 10, along axis 10a, between the raised position, in which piston 14 is in a withdrawn rest position, and the lowered position, in which piston 14 is in an extracted position.

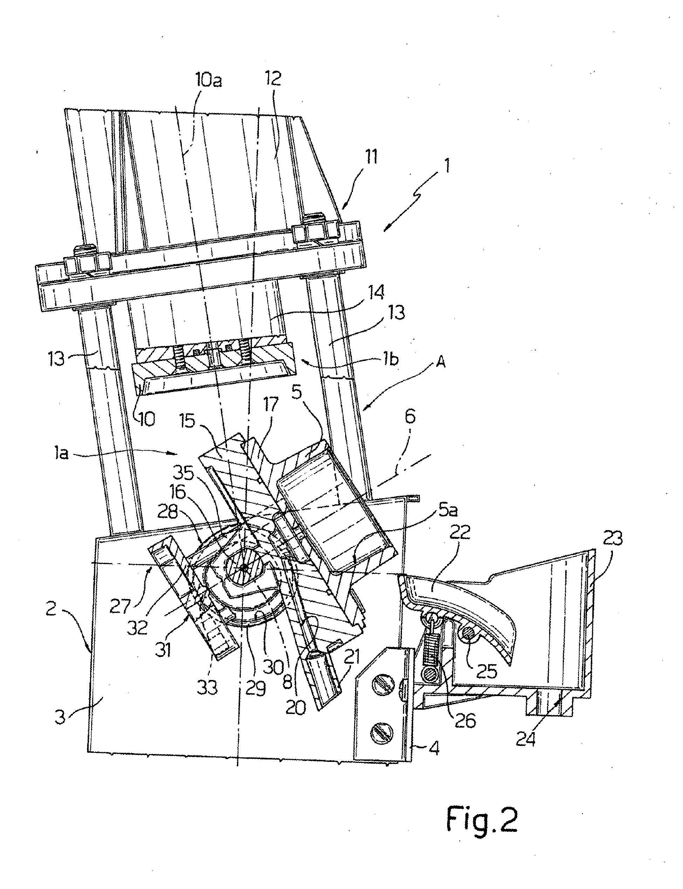

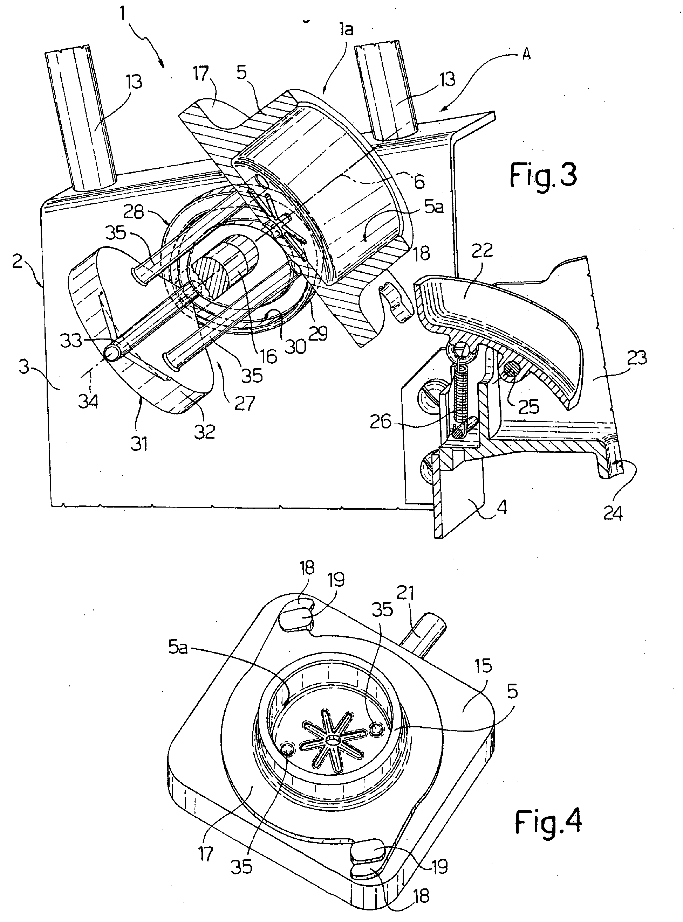

As shown in Figures 2 and 3, cup 5 is fitted in rotary manner to frame 2 by a parallelepiped-shaped supporting plate 15 forming part of container-holder 1a and integral with a pin 16, which is coaxial with axis 8 and fitted in rotary manner through lateral walls 3 to rotate, together with plate 15 and cup 5, about axis 8 under control of motor 7.

Cup 5 is fitted removably to plate 15 by means of a latch fastener by which to change cup 5 quickly and easily when using capsules 9 of different types/sizes. As shown in more detail in Figure 4, the latch fastener comprises a circular flange 17 fitted rigidly to the end of cup 5 facing plate 15, and comprising two diametrically opposite, hook-shaped appendixes 18 which removably engage respective catches 19 on plate 15.

As shown in Figure 2, the bottom wall of cup 5 has a number of radiating grooves for collecting the infused beverage from container 9 and feeding it into an outflow channel 20, which extends from the bottom of cup 5, through plate 15 and along a conduit 21 integral with and projecting from plate 15 in a substantially radial direction with respect to axis 6.

As shown in Figure 7, when cup 5 is in the percolating position, the beverage flows out of conduit 21 into a trough 22, which is fitted to and communicates with a well 23 integral with frame 2 and having a beverage outflow opening 24 in its bottom wall.

As shown in Figure 5, when cup 5 is in the loading position, the end of trough 22 facing container-holder 1a is located between cup 5 and conduit 21, so as to interfere with both cup 5 and conduit 21 as container-holder 1a rotates about axis 8.

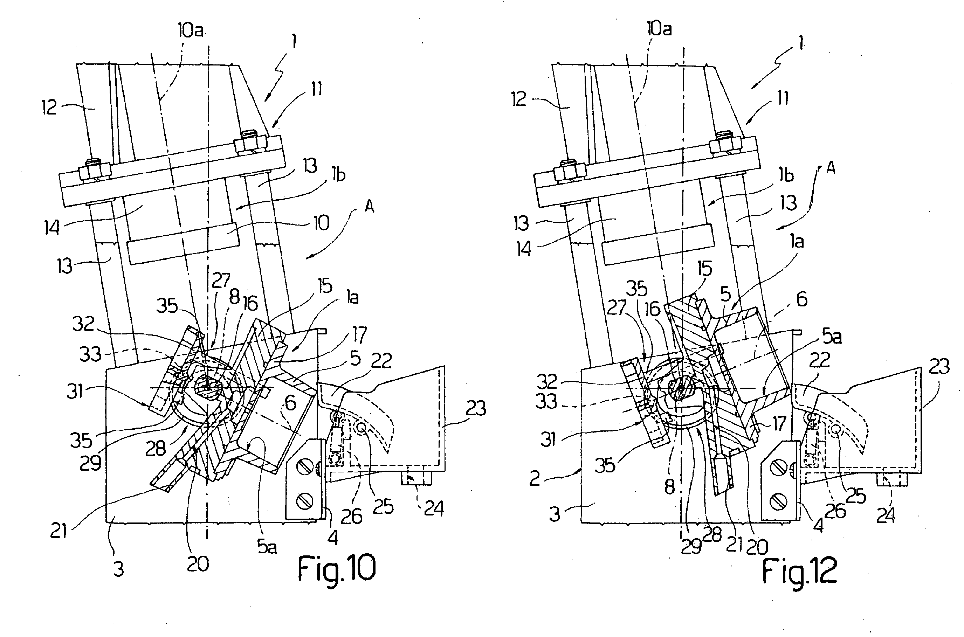

For container-holder 1a to rotate freely, trough 22 is mounted on a pin 25, integral with well 23 and parallel to axis 8, to oscillate, with respect to well 23 and in opposition to a return spring 26, between a normal lowered position (Figures 5-9 and 11), and a raised position (shown in Figures 10 and 12 and by a dash line in Figure 5), into which trough 22 is moved a first and a second time (Figures 10, 12) by cup 5, as cup 5 moves from the unloading to the loading position, and a third time (Figure 5) by conduit 21, as cup 5 moves from the loading position to the percolating position.

Trough 22 being mounted to interfere with, and be oscillated about axis 8 by, container-holder 1a has two advantages: firstly, it allows conduit 21 to overlap trough 22 when cup 5 is in the percolating position, so the beverage flowing out of conduit 21 flows precisely into trough 22; and secondly, it provides for repeatedly shaking trough 22 at the end of the operating cycle of machine 1, and so shaking off any remaining drops of beverage, which are thus prevented from settling and forming dry residue inside trough 22.

More specifically, the trough 22 shaking effect is achieved by the end of trough 22 interfering with the free edge of cup 5 as cup 5 moves back into the loading position.

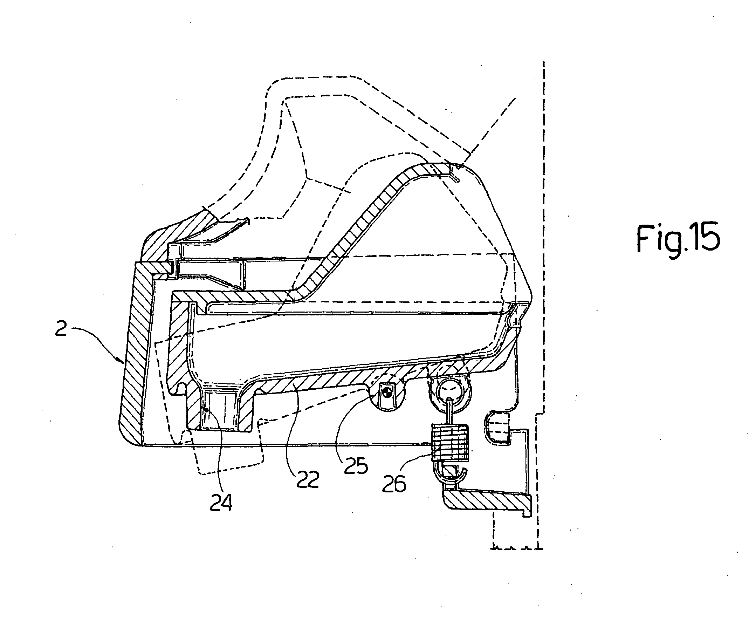

In the Figure 15 variation, well 23 is eliminated, and trough 22, which in this case is fitted to a fixed portion of frame 2, is closed at the front and has a bottom outflow opening 24 through which the beverage flows out directly.

Machine 1 also comprises an ejector device 27 for pushing the used container 9 out of cup 5 simultaneously with and by virtue of cup 5 rotating about axis 8 at the end of the percolating stage. Without ejector device 27, in fact, simply tipping cup 5 upside down may not be sufficient for container 9 to drop out by gravity; the reason being that, when injected with pressurized hot water at the percolating stage, container 9 is normally deformed radially, thus adhering to the inner surface of cup 5, and is prevented from dropping out of cup 5 simply by force of gravity when the cup is turned upside down.

As shown in Figures 2 and 3, ejector device 27 comprises two fixed face cams 28 located facing each other on opposite sides of plate 15, and each of which comprises a disk 29 coaxial with pin 16, integral with a respective lateral wall 3, and having a track 30 extending endlessly about axis 8.

Ejector device 27 also comprises a cross member 31 located on the opposite side of axis 8 to cup 5, and comprising a flat central body 32 perpendicular to axis 6, and two cylindrical appendixes 33 coaxial with each other and with an axis 34 parallel to axis 8. Each appendix 33 extends from body 32 to a respective cam 28, so its free end, acting as a cam follower, engages relative track 30.

Ejector device 27 also comprises two ejectors 35 defined by respective rods, which are integral with body 32, are located on opposite sides of axis 6, and extend, parallel to axis 6 and on opposite sides of axis 8, from body 32 to cup 5 to engage in axially sliding manner respective holes formed through plate 15 and the bottom wall of cup 5.

In actual use, by virtue of the connection between ejectors 35 and cup 5, rotation of cup 5 therefore simultaneously rotates body 32 and slides each cam follower-appendix 33 along respective track 30, the profile of which, in turn, moves ejectors 35 axially, in a direction parallel to axis 6, between a withdrawn rest position (Figures 2-7), in which the free end of each ejector 35 is located outside chamber 5a, and an extracted eject position (Figures 8-12), in which the free end of each ejector 35 projects inside chamber 5a.

Operation of machine 1 will now be described as of Figure 5, which corresponds to the loading position of cup 5. In this position, chamber 5a of cup 5 is positioned facing the user to receive a container 9 which, in the example shown, is a standard perforated capsule defined by a cylindrical container made of rigid plastic material, closed by two perforated end walls, and having, at one end, an annular flange which rests on the free edge of cup 5 when container 9 is fully inserted inside cup 5.

When motor 7 is turned on by means of an external control, pin 16 rotates container-holder 1a (anticlockwise in Figure 5) about axis 8 to move cup 5 into the percolating position, in which chamber 5a faces sprinkler 10 and is coaxial with axis 10a (Figure 6 shows a position shortly before the percolating position).

During this movement, conduit 21 strikes the end of trough 22 facing container-holder 1a, so the trough oscillates about the axis of pin 25.

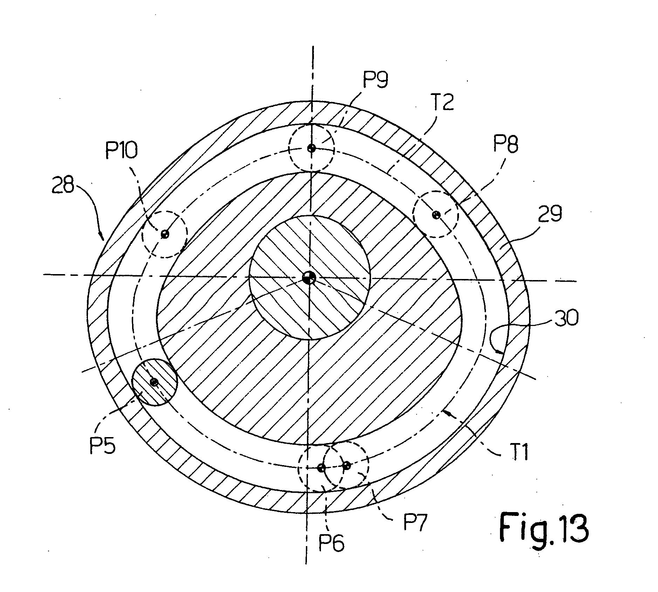

As shown in Figure 13, each track 30 is designed so that, as cup 5 moves from the loading to the percolating position, each appendix 33 is drawn along a circular portion T1 coaxial with axis 8 (in Figure 13, each of the positions assumed successively by appendixes 33 is indicated by the letter P followed by the number of the Figure showing the corresponding position of cup 5); and, since the distance between axis 34 and axis 8 remains unchanged along portion T1, ejectors 35 therefore remain in the withdrawn rest position.

As shown in Figure 7, when push assembly 11 is activated, piston 14 moves down towards cup 5 so that sprinkler 10 presses the flange of container 9 in fluidtight manner against the free edge of cup 5 to define, with cup 5, a fluidtight percolating chamber.

When pressurized hot water is fed through sprinkler 10, the anhydrous material in container 9 is percolated, and the resulting beverage flows out through conduit 21, trough 22 and well 23.

At the end of the percolating and pressurized-hot-water supply stage, piston 14 is restored by an inner return spring (not shown) to the withdrawn position, and motor 7 rotates cup 5 about axis 8 in the same direction as before (anticlockwise in Figures 8 and 13), so that appendixes 33 begin sliding along respective portions T2 of respective tracks 30, the profiles of which bring axis 34 closer to axis 8, and so move body 32 towards cup 5. As a result, ejectors 35 are moved into the extracted position, thus pushing container 9 out of cup 5 (Figure 8).

Figure 9 shows the container 9 unloading position, with cup 5 tipped upside down, and ejectors 35 in the extracted position.

As cup 5 rotates further about axis 8 (Figures 10-12), appendixes 33 slide along end portions of respective portions T2, so that axis 34 is moved away from axis 8 (Figure 13), thus restoring ejectors 35 to the withdrawn rest position (Figure 5).

During this rotation, cup 5 strikes trough 22 twice (Figures 10 and 12), thus producing two successive oscillations of trough 22 about the axis of pin 25 and so completely draining the trough.

The enormous advantages of machine 1 will be clear from the above description. Ejector device 27 provides for effectively ejecting the used container 9 from cup 5 in any operating condition; and location of cross member 31 and cup 5 on opposite sides of axis 8 greatly reduces the size of container-holder 1a depending on the presence of ejector device 27, and provides for a high straightforward, compact structure of machine 1.

The latch fastener connecting cup 5 to plate 15 provides for changing cup 5 quickly and easily, when using containers 9 of different types/sizes, thus making machine 1 highly versatile.

Finally, interference between cup 5 and trough 22, near the end of the operating cycle of machine 1, provides, as stated, for completely draining trough 22, and so preventing any leftover beverage from settling and forming dry residue inside trough 22.

To conclude, it should be pointed out that machine 1 may also be operated with capsules other than the perforated capsule in the example shown, e.g. a sealed capsule. In which case, machine 1 must obviously be equipped with a first known piercing device (not shown) connected to sprinkler 10, and a second known piercing device (not shown) connected to cup 5.

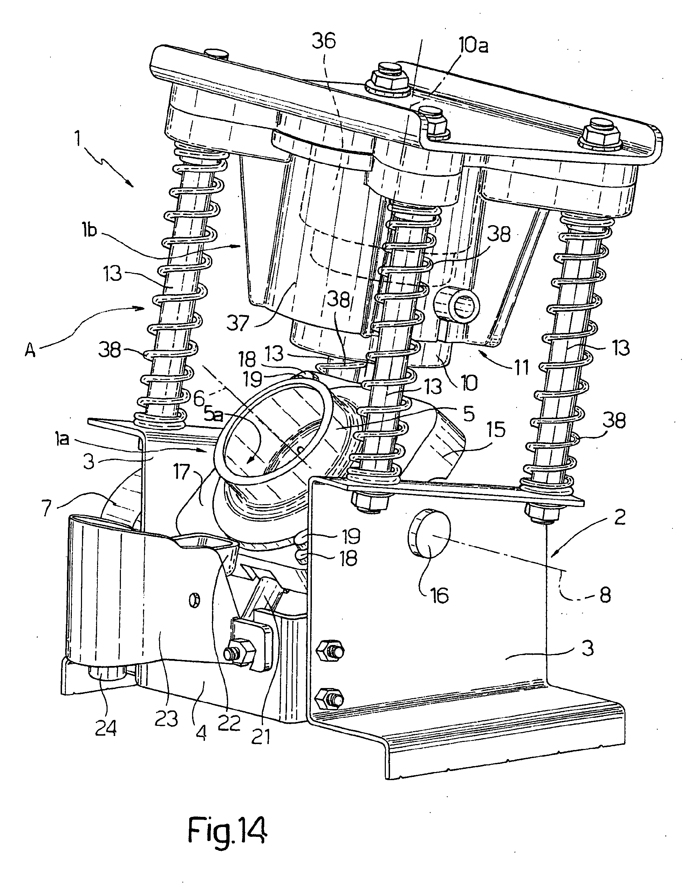

Figure 14 shows a variation of machine 1 with a different configuration of push assembly 11. In this case, the hydraulic cylinder comprises an inner cylindrical body 36 connected rigidly to frame 2 by uprights 13; and an outer sleeve 37 which is fitted in sliding manner to both cylindrical body 36 and uprights 13, is fitted with sprinkler 10 on the end facing cup 5, and is movable between a withdrawn rest position, and a lowered position engaging cup 5 in the percolating position.

Sleeve 37 is normally kept in the withdrawn rest position by return springs 38 wound about uprights 13, between sleeve 37 and frame 2.

Obviously, this variation of machine 1 operates in the same way as the embodiment described above and illustrated in Figures 1-12.

In a variation not shown, as opposed to four uprights 13, push assembly 11 may comprise only two uprights 13 located on opposite sides of the hydraulic cylinder.

In a variation not shown, ejector device 27 may comprise only one appendix 33 cooperating with a respective cam 28.

In a variation not shown, push assembly 11 may be fitted to frame 2 by only two uprights 13 located on opposite sides of push assembly 11.

In further variations not shown, ejector device 27 may comprise one ejector 35 or more than two ejectors 35; and the ejector/s may be fitted on the free end/s with a perforated plate movable along chamber 5a. In which case, if equipped with a fixed scraper immediately downstream from the unloading position, machine 1 may also be operated using measures of loose anhydrous material funnel-fed into cup 5 in the loading position.

## Claims

1. A method of making beverages by percolating anhydrous material, the method comprising the steps of producing a beverage by a percolating assembly (A) performing an operating cycle; and discharging the resulting beverage from the percolating assembly (A) via an outflow member (22); the method being **characterized by** comprising the further step of imparting a shaking movement to the outflow member (22) during the operating cycle.

2. A method as claimed in Claim 1, wherein the shaking movement is an oscillating movement.

3. A method as claimed in Claim 1 or 2, wherein the shaking movement is imparted to the outflow member (22) by the percolating assembly (A).

4. A method as claimed in one of the foregoing Claims, wherein the step of producing the beverage comprises moving a movable part (1a) of the percolating assembly (A) along a path, along which said movable part (1a) interferes with the outflow member (22).

5. A method as claimed in Claim 4, wherein the path is an endless path.

6. A method as claimed in Claim 4 or 5, wherein the path is a circular path.

7. A method as claimed in one of Claims 4 to 6, wherein the path is a circular path about a first axis (8), and the shaking movement is an oscillation about a second axis (25) substantially parallel to the first axis (8).

8. A method as claimed in one of Claims 4 to 7, wherein the movable part (1a) is a material-holder which, during the operating cycle, is moved along said path through a material-loading position, and a percolating position in which the material-holder (1a) is connected to a pressurized-water-dispenser (1b).

9. A method as claimed in any one of the foregoing Claims, wherein the shaking movement is imparted to the outflow member (22) during the operating cycle and after the step of discharging the beverage.

10. A method as claimed in Claims 8 and 9, wherein said shaking movement is imparted to the outflow member (22) before the material-holder (1a) is returned to the loading position.

## Patentansprüche

1. Verfahren zur Herstellung von Getränken durch Versickerung von wasserfreiem Material, wobei das Verfahren die Schritte der Herstellung eines Getränks durch eine Versickerungseinheit (A) enthält, die einen Operationszyklus ausführt, und wobei das sich ergebende Getränk aus der Versickerungseinheit (a) über ein Ausflussmittel (22) ausgegeben wird, **dadurch gekennzeichnet, dass** ein weiterer Schritt zur Beaufschlagung einer Schüttelbewegung auf das Ausflussmittel (22) während des Operationszyklus aufgebracht wird.

2. Verfahren nach Anspruch 1, wobei die Schüttelbewegung eine oszillierende Bewegung ist.

3. Verfahren nach Anspruch 1 oder 2, wobei die Schüttelbewegung auf das Ausflussmittel (22) durch die Versickerungseinheit (A) aufgebracht wird.

4. Verfahren nach einem der vorangegangenen Ansprüche, wobei der Schritt zur Herstellung des Getränks die Bewegung eines beweglichen Teils (1a) der Versickerungseinheit (A) entlang eines Wegs enthält, entlang dessen besagtes bewegliches Teil (1a) mit dem Ausflussmittel (22) interferiert.

5. Verfahren nach Anspruch 4, wobei der Weg ein endloser Weg ist.

6. Verfahren 4 oder 5, wobei der Weg ein kreisförmiger Weg ist.

7. Verfahren nach einem der Ansprüche 4 bis 6, wobei der Weg ein kreisförmiger Weg um eine erste Achse (8) ist und die Schüttelbewegung eine Oszillation um eine zweite Achse (25) im Wesentlichen parallel zu der ersten Achse (8).

8. Verfahren wie in einem der Ansprüche 4 bis 7 beansprucht, wobei das bewegliche Teil (1a) ein Materialhalter ist, der während des Operationszyklus entlang besagten Wegs durch eine Materialbeladungsposition bewegt wird und eine Versickerungsposition, in welcher der Materialhalter (1a) mit einem unter Druck stehenden Wasserverteiler (1b) verbunden ist.

9. Verfahren wie in einem der vorangegangenen Ansprüche beansprucht, wobei die Schüttelbewegung dem Ausflussmittel (22) während des Operationszyklus nach dem Schritt der Getränkeausgabe aufgeprägt wird.

10. Verfahren wie in einem der Ansprüche 8 und 9 beansprucht, wobei besagte Schüttelbewegung dem Ausflussmittel (22) aufgeprägt wird bevor der Materialhalter (1a) zur Beladeposition zurückgeführt ist.

## Revendications

1. Procédé pour produire des boissons en percolant un matériau anhydre, le procédé comprenant les étapes consistant à produire une boisson avec un ensemble de percolation (A) réalisant un cycle de fonctionnement ; et décharger la boisson résultante de l'ensemble de percolation (A) via un élément de sortie (22) ; le procédé étant **caractérisé en ce qu'**il comprend l'étape supplémentaire consistant à communiquer un mouvement de secousse à l'élément de sortie (22) pendant le cycle de fonctionnement.

2. Procédé selon la revendication 1, dans lequel le mouvement de secousse est un mouvement oscillant.

3. Procédé selon la revendication 1 ou 2, dans lequel le mouvement de secousse est communiqué à l'élément de sortie (22) par l'ensemble de percolation (A).

4. Procédé selon l'une quelconque des revendications précédentes, dans lequel l'étape consistant à produire la boisson comprend l'étape consistant à déplacer une partie mobile (1a) de l'ensemble de percolation (A) le long d'une trajectoire, le long de laquelle ladite partie mobile (1a) interfère avec l'élément de sortie (22).

5. Procédé selon la revendication 4, dans lequel la trajectoire est une trajectoire sans fin.

6. Procédé selon la revendication 4 ou 5, dans lequel la trajectoire est une trajectoire circulaire.

7. Procédé selon l'une quelconque des revendications 4 à 6, dans lequel la trajectoire est une trajectoire circulaire autour d'un premier axe (8), et le mouvement de secousse est une oscillation autour d'un deuxième axe (25) sensiblement parallèle au premier axe (8).

8. Procédé selon l'une quelconque des revendications 4 à 7, dans lequel la partie mobile (1a) est un support de matériau qui, pendant le cycle de fonctionnement, est déplacé le long de ladite trajectoire sur une position de chargement de matériau et une position de percolation dans laquelle le support de matériau (1a) est raccordé à un distributeur d'eau sous pression (1b).

9. Procédé selon l'une quelconque des revendications précédentes, dans lequel le mouvement de secousse est communiqué à l'élément de sortie (22) pendant le cycle de fonctionnement et après l'étape consistant à décharger la boisson.

10. Procédé selon les revendications 8 et 9, dans lequel ledit mouvement de secousse est communiqué à l'élément de sortie (22) avant que le support de matériau (1a) ne revienne à la position de chargement.
